# EUROPEAN PATENT SPECIFICATION

(11) **EP 1 440 822 B1**
(45) Date of publication and mention of the grant of the patent: **29.03.2006**
(21) Application number: 04001248.6
(22) Date of filing: 21.01.2004
(51) Int. Cl.: B60C 11/00

(54) **Pneumatic tire**
Luftreifen
Bandage pneumatique

(30) Priority: 24.01.2003 JP 2003016526
(43) Date of publication of application: 28.07.2004
(73) Proprietor: Sumitomo Rubber Industries, Ltd., Kobe-shi, Hyogo-ken (JP)
(72) Inventor: Kajita, Hiroaki, Sumitomo Rubber Industries, Ltd., Kobe-shi Hyogo-ken (JP)
(74) Representative: Manitz, Finsterwald & Partner GbR

(56) References cited:
- WO-A-99/14065
- US-B1- 6 321 180
- PATENT ABSTRACTS OF JAPAN vol. 1996, no. 08, 30 August 1996 (1996-08-30) & JP 08 108710 A (BRIDGESTONE CORP), 30 April 1996 (1996-04-30)
- PATENT ABSTRACTS OF JAPAN vol. 1995, no. 06, 31 July 1995 (1995-07-31) & JP 07 081303 A (YOKOHAMA RUBBER CO LTD:THE), 28 March 1995 (1995-03-28)

## Description

The present invention relates to a pneumatic tire, more particularly to a structure of the tread portion being capable of improving uneven wear in the tread shoulder zone.

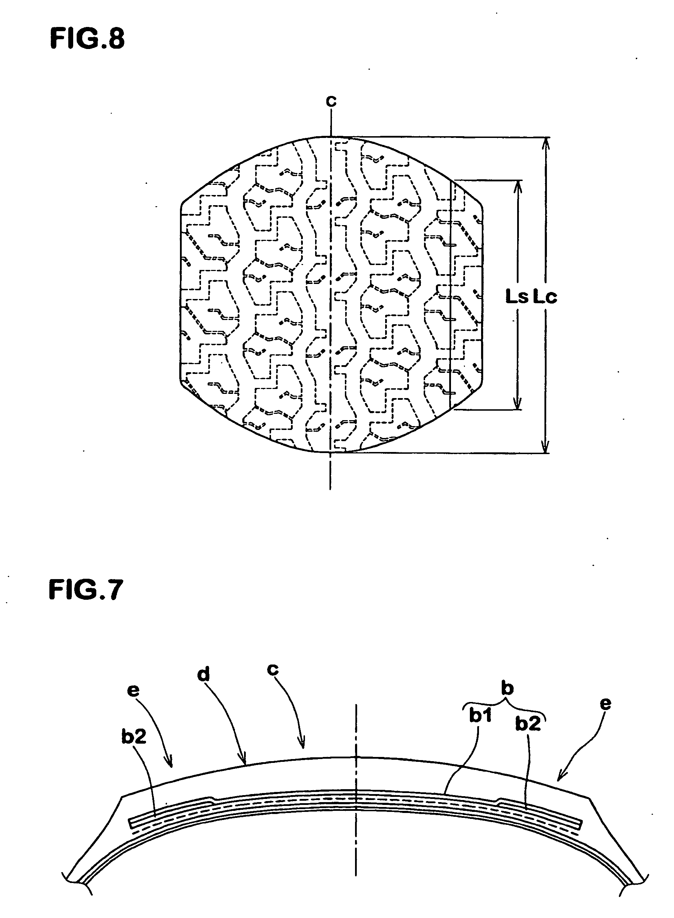

Recently, 4-wheel Drive cars such as sport utility vehicle (SUV) and recreational vehicle (RV) are rising in popularity. The tires of such a 4WD car have a number of occasions to run on well paved highways as well as off roads. Therefore, in order to achieve both of ride comfort when running off-road and high-speed durability on the highways, a tread reinforcing belt including a full width band b1 and a pair of axially spaced edge bands b2 as shown in Fig.7 is preferred.

In this structure, however, uneven wear is very liable to occur in the tread shoulder zone (e) because the hoop effect of the band as a whole becomes decreased in the tread crown (c) between the edge bands b2 when compared with that within the width of the edge band, and the tread crown (c) is liable to swell. Accordingly, the ground pressure is relatively decreased in the tread shoulder zone (e) and the slippage between the tire and road surface is increased. As a result, shoulder wear - the tread wears more in the tread shoulder zone (e) than the tread crown (c) - is liable to occur. In the tread shoulder zone (e), so called heel and toe wear, namely, uneven wear between the heel edge and toe edge of a tread block is liable to occur.

In general, a pneumatic tire with a swollen tread crown presents, as shown in Fig.8, a round tire foot print. Thus, the inventor made a study of relationships among the uneven wear, slippage and the contour shape of the tire foot print, and found that the uneven wear can be decreased by specifically defining the contour shape.

It is therefore, an object of the present invention to provide a pneumatic tire, in which by improving the tire foot print shape by specifically defining the ground contacting length in the tread shoulder zone in relation to that in the tread crown zone, uneven wear is effectively reduced.

According to the present invention, a pneumatic tire comprises a tread portion, a pair of sidewall portions, a pair of bead portions, a carcass extending between the bead portions, a breaker disposed radially outside the carcass, and a band disposed radially outside the breaker, the band composed of a full width ply extending across the substantially overall width of the breaker, and a pair of axially spaced edge plies, wherein in a ground contacting face of the tire under a normally inflate loaded condition which face has axially outermost edges between which the ground contacting width TW is defined, the circumferential length Ls of the ground contacting face at an axial position 10 % of TW axially inwards of each of the axially outermost edges is set in a range of from 75 to 85 % of the circumferential length Lc of the ground contacting face at the center of the ground contacting width.

Here, the ground contacting width TW of the tire is the axial width between the axially outermost edges E (or tread edges E) of the ground contacting region (corresponding to the foot print) of the tire under the normally inflated loaded condition.

The normally inflated loaded condition is such that the tire is mounted on a standard wheel rim and inflate to a standard pressure and loaded with a standard tire load. Additionally, the undermentioned normally inflated unloaded condition is such that the tire is mounted on the standard wheel rim and inflate to the standard pressure but loaded with no tire load.

The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like.

The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

In case of passenger car tires, however, the standard pressure and standard tire load are uniformly defined by 180 kPa and 88 % of the maximum tire load, respectively.

Embodiments of the present invention will now be described in detail in conjunction with the accompanying drawings.

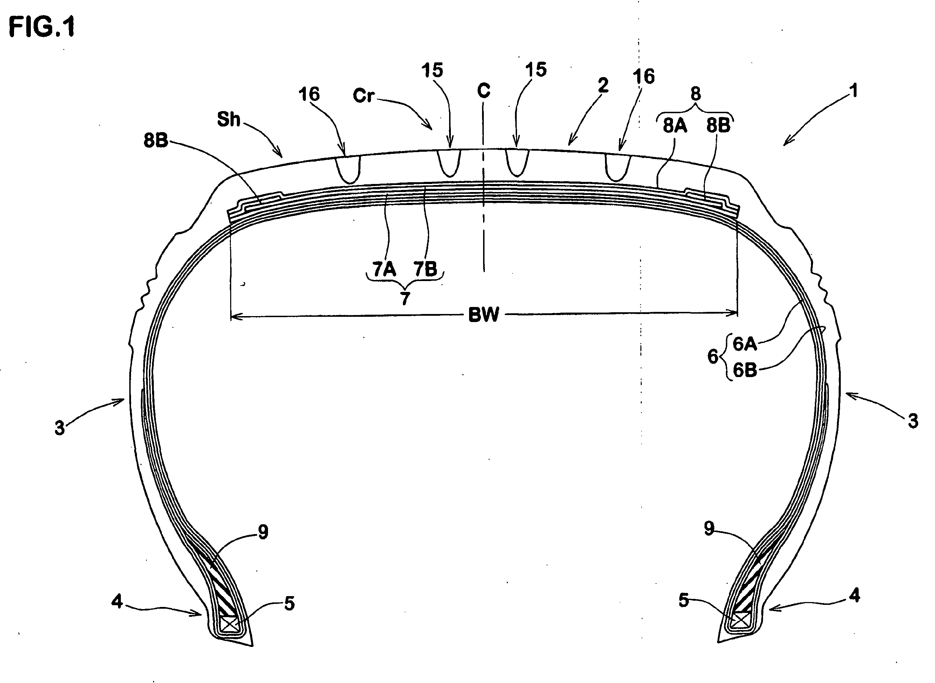

Fig.1 is a cross sectional view of a pneumatic tire according to the present invention.
Fig.2 is a cross sectional view of the tread portion.
Fig.3 is the foot print of the pneumatic tire.
Fig.4 is a developed partial plan view of the tire showing an example of the tread pattern.
Fig.5 is a perspective view of a rubber tape which can be used to form a band.
Fig.6 is a cross sectional view for explaining the measurement of heel & toe wear (m).
Fig.7 is a cross sectional view of a tread portion for explaining the problems involved in a full band and edge band structure.
Fig.8 shows a tire foot print having an unfavorable contour shape.

In the drawings, pneumatic tire 1 according to the present invention is a radial tire comprises a tread portion 2, a pair of sidewall portions 3, a pair of bead portions 4 each with a bead core 5 therein, a carcass 6 extending between the bead portions 4, a breaker 7 disposed radially outside the carcass 6 in the tread portion 2 and a band 8 disposed on the radially outside of the breaker 7.

In this example, the tire size is 275/70R16, and he tire is designed for 4-wheel Drive cars, e.g. sport utility vehicle (SUV), minivan, sedan and the like to use without a tire tube.

The tread portion 2 is provided with a pair of circumferential grooves 15 disposed one on each side of the tire equator C. The circumferential grooves 15 extend continuously and circumferentially of the tire to divide the tread portion 2 into a crown part RC between the circumferential grooves 15 and a outer part Rs axially outside each of the circumferential grooves 15. In this embodiment, the grooves 15 are a zigzag groove, but it may be a straight groove or a smoothly curved wavy groove.

The width of the circumferential groove 15 is set in the range of not less than 2 %, preferably not less than 4 %, but not more than 8 %, preferably not more than 6 % of the ground contacting width Tw. The groove depth is set in the range of not less than 8.0 mm, preferably not less than 8.5 mm, but not more than 12.0 mm, preferably not more than 10.5 mm.

If the crown part RC is too narrow in width, the rigidity thereof becomes insufficient. If the crown part RC is too wide, heat generation increases. In this light, it is preferable that the axial distance Wa from the tire equator C to the center line (in this example, center line of the amplitude) of the circumferential groove 15 is set in the range of not less than 5 %, preferably not less than 7 %, but not more than 12 %, preferably not more than 10 % of the ground contacting width TW.

The above-mentioned carcass 6 comprises at least one ply (in this example, two plies 6A and 6B) of cords arranged radially at an angle of from 75 to 90 degrees with respect to the tire equator C. For the carcass cords, polyester cords are used in this example. But, other organic fiber cords, e.g. nylon, rayon, aramid and the like can be used. Further, steel cords may be used according to need. The carcass plies 6A and 6B are each extended between the bead portions 4 through the tread portion 2 and sidewall portions 3 and turned up around the bead core 5 in each bead portion 4 from the axially inside to the axially outside to form a pair of turnup portions and a main portion therebetween.

In each of the bead portions 4, a bead apex 9 made of a hard rubber is disposed between the turnup portion and main portion of the carcass. The bead apex 9 extends radially outwards from the radial outside of the bead core 5 while tapering towards its radially outer end.

The above-mentioned breaker 7 comprises at least two cross plies 7A and 7B of cords laid at an angle of from 10 to 45 degrees with respect to the tire equator so as to cross the cords of the next ply. In this example, steel cords are used in each ply. But, organic fiber cords, e.g. aramid, rayon and the like can be used according to need. The radially innermost ply is widest and defines the width BW of the breaker 7. It is preferable that the breaker plies are gradually decreased in the width from the radially inside to the outside of the tire. If the breaker width Bw is too narrow, it is difficult to secure the rigidity which is necessary for the tread shoulder zone. If too wide, the durability is liable to decrease because the rubber thickness between the breaker edge and the tire outer surface decreases. Therefore, the breaker width BW is preferably set in the range of not less than 95 %, more preferably not less than 100 %, but preferably not more than 105 % of the ground contacting width Tw.

The band 8 is disposed on the radially outside of the breaker 7 so as to cover the overall width of the breaker 7, and made of cords whose cord angle is almost zero or a small value of not more than 5 degrees with respect to the tire equator.

In the present invention, the band 8 consists of a pair of axially spaced edge band plies 8B covering the respective edge portions of the breaker 7, and a full width band ply 8A extending across the substantially overall width of the breaker 7.

If the band 8 consists of only a full band ply 8A, it is difficult to improve the high-speed durability. If the band 8 consists of two or more full band plies 8A only, the rigidity in the tread crown Cr is excessively increased to deteriorate ride comfort. Further, the tire weight is unfavorably increased. If the band 8 consists of the edge band plies 8B only, the hoop effect becomes insufficient in the tread crown Cr and the high-speed durability decreases.

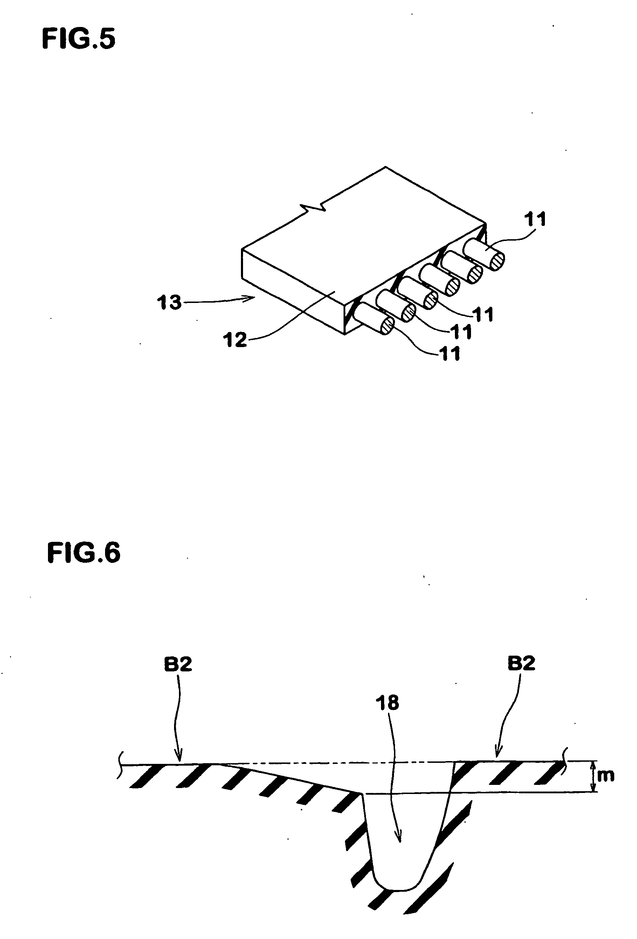

Each ply 8A, 8B can be made up of a plurality of spiral windings of at least one cord or a wound strip of rubberized parallel cords. Preferably, the band 8 is formed by spirally winding at least one organic fiber cord having a relatively low modulus, e.g. nylon cord or the like. In this case, the use of a rubber tape 13 is preferred. The rubber tape 13 is as shown in Fig.5 such that a single cord 11 or parallel cords 11 are embedded in unvulcanized rubber 12 along the length thereof.

The tape 13 has a width narrower than the ply 8A, 8B to be formed, and by spirally winding a tape plural times the ply is formed.

In connection with the winding pitch, there may be formed between the adjacent windings an overlap or a space or neither.

The above-mentioned strip, on the other hand, means that having a width corresponding to the ply to be formed. Thus, the strip is wound almost once around the tire with the circumferential edges overlapped each other.

From a point of view of uniformity, it is preferable that the rubber tape 13 is wound at the pitch corresponding the tape width without a space and an overlap between the windings.

In any case, the cord count in each ply is set in the range of from 45 to 55 (/5cm) in this embodiment.

If the width Ew of each of the edge band plies 8B is less than 25 % of a half width (BW/2) of the breaker 7, it is difficult to improve the high-speed durability as the hoop effect becomes deficient in the tread shoulder zone. If the width EW is more than 40 % of a half width (BW/2), the ride comfort is liable to deteriorate. Therefore, the axial width Ew of the edge band ply 8B is preferably set in the range of not less than 12.5 %, more preferably more than 14 % but not more than 20 %, more preferably less than 17.5 % of the breaker width BW under the above-mentioned normally inflated unloaded condition.

The edge band plies 8B may be disposed on the radially outside of the full band ply 8A disposed on the radially outside of the breaker 7. But, in this embodiment, the edge band plies 8B are disposed on the radially outside of the breaker 7, and the full band ply 8A is disposed on the radially outside of the edge band plies 8B so that the edge band plies 8B cover the axially outer edges of all of the breaker plies 7A and 7B and the full band ply 8A covers the axially inner edges of the edge band plies 8B. In this example, the axially outer edges of the band plies 8A and 8B are substantially aligned with the widest breaker ply 7A.

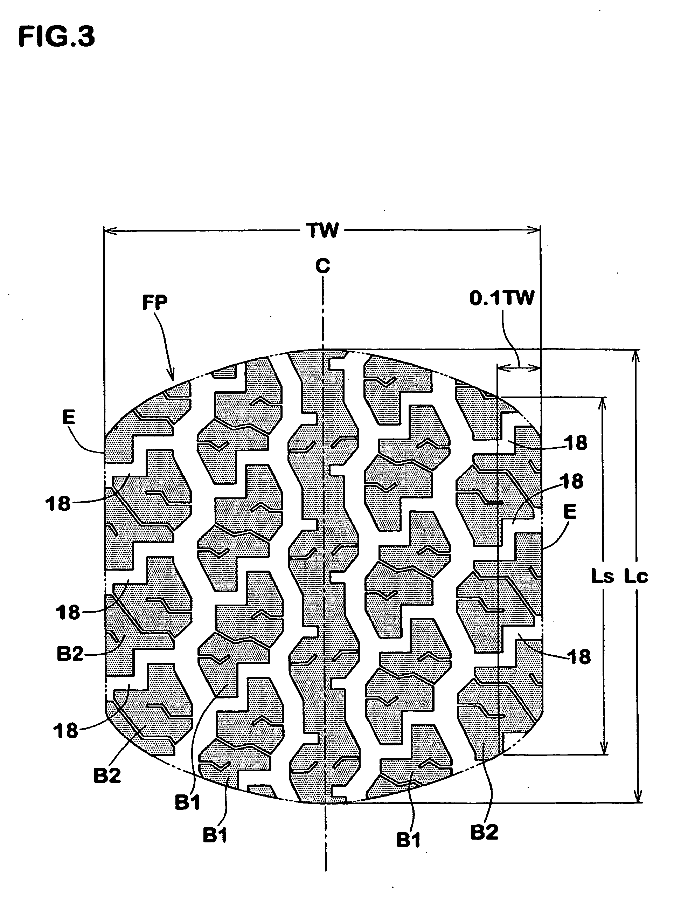

Fig.3 shows an example of the target tire foot print FP under the above-mentioned normally inflated loaded condition.

The shoulder ground contacting length Ls which is defined as the circumferential length of the foot print FP at an axial position axially inward of the tread edges E by 10 % of the ground contacting width TW is set in the range of not less than 75 %, preferably not less than 80 %, but not more than 85 % of the crown ground contacting length Lc which is defined as the circumferential length of the foot print FP at the central position (tire equator) of the ground contacting width Tw.

If the length Ls is less than 75 % of the length LC, the ground pressure decreases in the tread shoulder zone to increase the slippage and the shoulder wear and heel and toe wear are increased. If the length Ls is more than 85 % of the length Lc, the ground pressure increases excessively in the tread-shoulder zone. This also increase the heel and toe wear during cornering in particular.

In the foot print FP in this embodiment, the crown ground contacting length Lc is longest, and the circumferential length of the foot print FP is gradually decreased towards the tread edges E.

In order to change the shape of the contour of the foot print FP, specifically in order to increase the shoulder ground contacting length Ls, for example, the following measures may be employed alone or in combination: increasing the thickness of a tread rubber in the shoulder part Rso; decreasing the width of the breaker; increasing the angle of the breaker cords with respect to the tire circumferential direction; increasing the radius of curvature of the tread profile (becomes more flat); increasing the radius of curvature of the carcass profile in the tread portion 2, etc. In this embodiment, the thickness of a tread rubber G is increased in the shoulder part RSO.

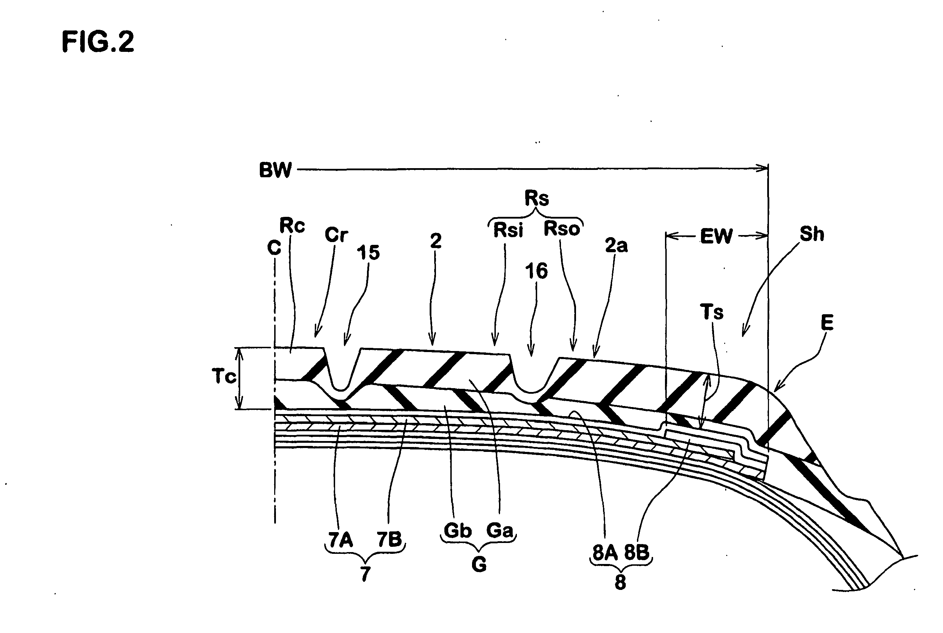

As shown in Fig.2, the tread rubber G in this example consists of a radially inner tread rubber Gb which is disposed on the band 8 and a radially outermost tread rubber Ga which is disposed on the radially outside thereof defining the ground contacting surface. Excepting the grooved part, the percentage of the thickness of the outer tread rubber Ga to the overall tread rubber thickness (Tc, Ts) is increased in the outer part R_{S} when compared with that in the crown part RC.

The outermost tread rubber Ga is harder than the inner tread rubber Gb. For example, the hardness of the outermost tread rubber Ga is set in the range from 60 to 62 degrees, and the hardness of the inner tread rubber Gb is set in the range of from 54 to 58 degrees. Preferably, the loss tangent (delta) of the inner tread rubber Gb is set in the range of from 0.03 to 0.07. In other words, a relatively low heat build-up (low hysteresis) rubber is used. On the other hand, the loss tangent (delta) of the outermost tread rubber Ga is set in the range of from 0.15 to 0.20 from a point of view of wear resistance.

In this example, further, the above-mentioned percentage is gradually increased from the axially inside to the outside of the tire in the outer part Rs. Therefore, motion of the undermentioned blocks B1 and B2 in the outer part Rs is effectively controlled, which helps to reduce wear in the tread shoulder zone while decreasing heat generation from the crown part during high speed running.

Here, the hardness means a hardness measured with a type-A durometer according to Japanese Industrial standard K6253.

The loss tangent (delta) is measured with a viscoelastic spectrometer manufactured by IWAMOTO SEISAKUSYO, using a specimen of 4 mm width X 30 mm length X 1.5 mm thickness under the following measuring conditions: temperature of 70 deg. c, frequency of 10 Hz and dynamic distortion of plus/minus 2%.

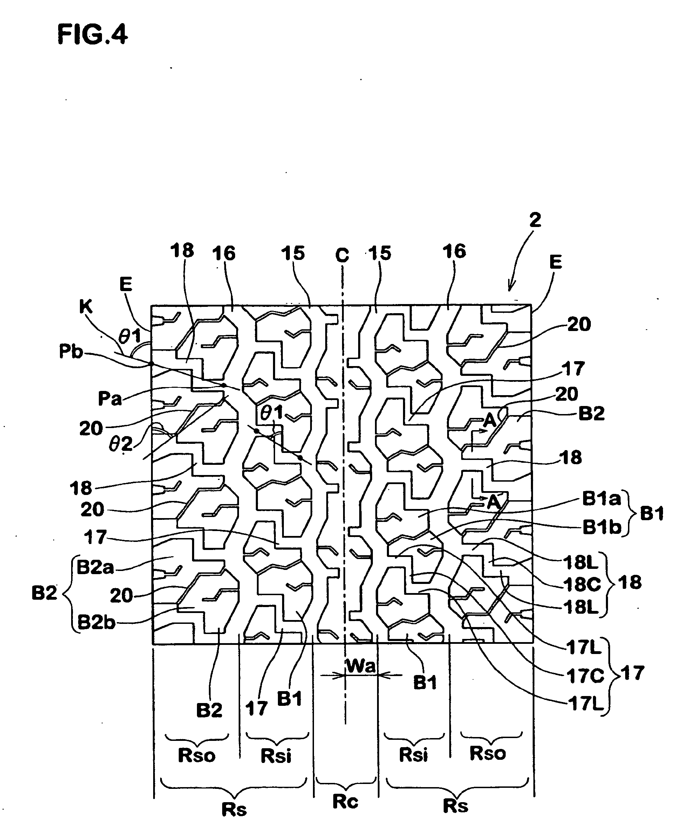

Fig.4 shows an example of the tread pattern.

In case of a combination of a full width band ply 8A and axially spaced edge band plies 8B, naturally, the hoop effect of the band 8 becomes less between the edge band plies 8B in comparison with that within the width of the edge band ply. In order to compensate such less hoop effect between the edge band plies 8B, the crown part RC in this embodiment is formed as a circumferential rib which extends substantially continuously in the tire circumferential direction, whereby the swelling in the tread crown due to tire inflation pressure, centrifugal force during high-speed running and the like may be effectively controlled. In order to maintain the substantial continuity, a groove or cut extending across the entire width of the rib is not provided. If it is necessary to provide grooves and/or cuts, they are terminate in the rib, preferably before the tire equator, and preferably they are staggered and formed shallower than the circumferential groove 15.

In this example, the tread portion 2 is provided with an additional circumferential grooves 16 axially outside each of the above-mentioned circumferential grooves 15. The axially outer circumferential grooves 16 also extend continuously and circumferentially of the tire. Thus, each of the outer part Rs is substantially bisected into an axially inner middle part Rsi and an axially outer shoulder part R_{SO.}
The axially outer circumferential groove 16 has the substantially same geometry as the axially inner circumferential groove 15. The width of the outer circumferential groove 16 is set in the range of not less than 2 %, preferably not less than 4 %, but not more than 8 %, preferably not more than 6 % of the ground contacting width TW. The groove depth thereof is set in the range of not less than 8.0 mm, preferably not less than 8.5 mm, but not more than 12.0 mm, preferably not more than 10.5 mm.

In this example, the middle part Rsi is provided with axial grooves 17 and thereby divided into middle blocks B1. similarly, the shoulder part Rso is provided with axial grooves 18 and thereby divided into axially outermost shoulder blocks B2. The axial grooves 17 and 18 have a groove width of from 6.0 to 8.0 mm, and a groove depth of from 5.0 to 7.0 mm. The axial grooves 17 and 18 are each made up of one circumferential segment 17C, 18C and two lateral segments 17L, 18L which are arranged in a zigzag formation. As to the inclination angle with respect to the circumferential direction, the circumferential segment 17C, 18C is substantially 0 degree, and the lateral segments 17L, 18L are substantially 90 degrees. Thus, each groove 17, 18 has a crank-shape and as a result, uneven wear can be further decreased.

Given that the overall inclination angle θ1 of the axial groove 17, 18 is an inclination angle with respect to the tire circumferential direction, of a straight line K drawn between the ends Pa and Pb of the groove at the groove center,
the overall inclination angle θ1 is set in the range of not less than 60 degrees, preferably not less than 65 degrees, but not more than 80 degrees, preferably not more than 75 degrees.
If the angle θ1 is less than 60 degrees or more than 80 degrees, it is difficult to prevent uneven wear.
In view of noise performance, it is preferable the angle θ1 of the axial groove 18 in the shoulder part Rso is larger than the angle θ1 of the axial groove 17 in the middle part Rsi.

with respect to each shoulder part Rso, the number of the axial grooves 18 is preferably such that 2 to 4 grooves, preferably 2 or 3 grooves exist in the foot print FP. Here, if 80 % or more of the length of the groove center line is included in the foot print FP, the groove is regarded as existing in the foot print FP. If the number exceeds 4, as the shoulder block rigidity decreases, the steering stability during high-speed straight running on well paved roads is liable to deteriorate, and further the overall tread wear or shoulder is liable to increase.

In this example, further, the shoulder blocks B2 are each subdivided into two block segments B2a and B2b by a narrow groove 20. Also, the middle blocks B1 are each subdivided into two block segments B1a and B1b by a narrow groove 20.
The narrow groove 20 extends zigzag across the block B1, B2, and the overall inclination of the narrow groove 20 which is defined as of a straight line drawn between the groove ends is inclined reversely to the above-mentioned straight K with respect to the tire circumferential direction.
If the narrow groove 20 is too wide, the block becomes low rigidity. If the narrow groove 20 is zero width, it is difficult to provide flexibility. Therefore, it is preferable that the groove width of the narrow groove 20 is set in the range of not less than 0.5 mm, preferably not less than 0.8 mm, but not more than 1.5 mm, preferably not more than 1.0 mm on the premise that the groove depth is in the range of from about 30 % to about 80 % of the groove depth of the axially outer circumferential groove 16.
As to the overall inclination angle θ2 of the narrow groove 20 which is defined in the same way as the above-mentioned angle θ1, the angle θ2 is preferably set in the range of from 40 to 50 degrees with respect to the tire circumferential direction.

### Comparison Test

Radial tires of size 275/70R16 (rim size 8JJX16) for 4WD sport utility vehicle (SUV) were made and tested for the high-speed durability and uneven wear.

### High-speed durability test

The test tire mounted on a standard rim (size 8JJX16) was subjected to an indoor wheel test prescribed by the Procedure for Load/speed Performance Tests of the Economic commission for Europe (ECE-30). The running speed was increased every 30 minutes at steps of 10 km/h from initial speed of 170 km/h, and the speed at which any failure occurred was measured together with the running time at that speed. (Tire pressure: 280 kPa)

### Uneven wear test

A Japanese 4WD SUV with an engine size of 4700 cc provided on all the four wheels with test tires (tire pressure: front 200 kPa, rear 220 kPa) was run for a traveling distance of 300 km in a test circuit course including a tight corner of 40 meter radius (cornering speed 50 km/h). Then, as shown in Fig.6, the heel and toe wear defined as the difference (m) of wear between the toe edge and heel edge of the shoulder block at the 0.1TW position was measured.

### Ride comfort test

The test car was run on dry rough roads in a tire test course (including asphalt road, stone-paved road and graveled road) and the test driver evaluated ride comfort, based on harshness, damping, thrust-up, etc. The test results are indicated in Table 1 by an index based on Ref. tire 1 being 100. The larger the index, the better the ride comfort.

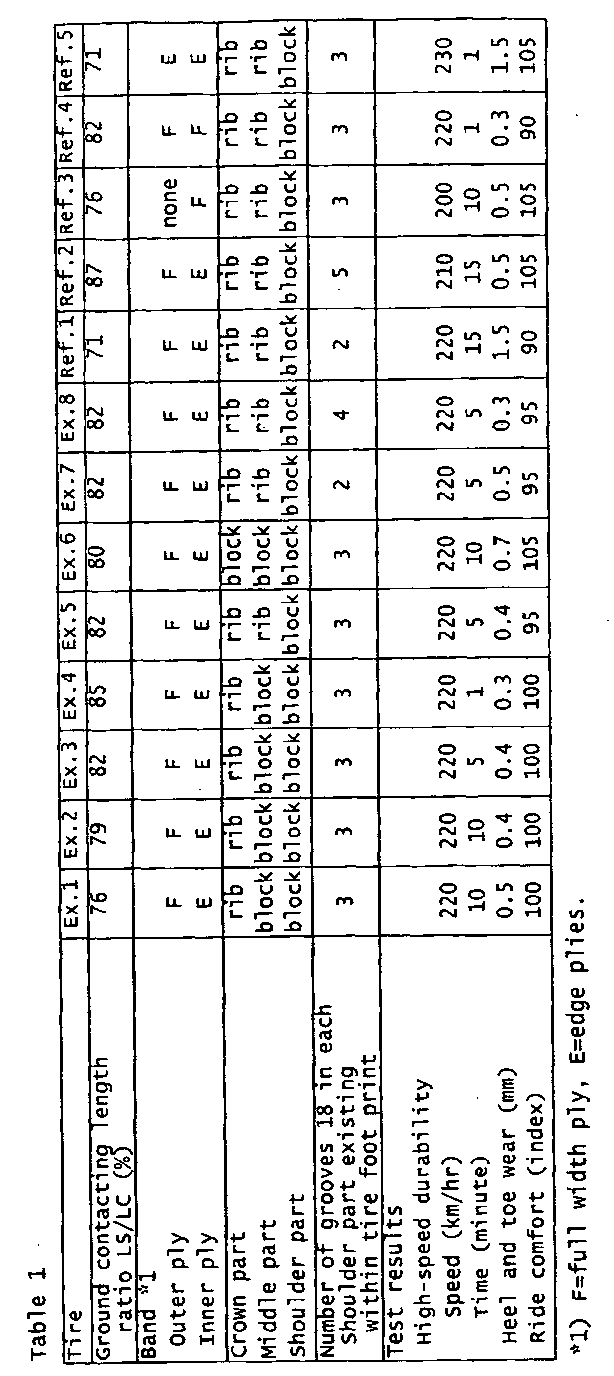

Common specifications:
- Ground contacting width TW:: 195 mm
- Carcass:: Two plies of polyester cords arranged radially at 90 degrees with respect to the tire equator
- Breaker:: Two cross plies of steel cords laid at +24 degrees and -24 degrees with respect to the tire equator
- Band:: a spiral structure formed by spirally winding a rubber tape with nylon cords at a cord angle of 3 degrees.

Tread pattern: Fig.4
   Inner circumferential groove 15
      Groove width: 9.5 mm
      Groove depth: 10.2 mm
   Outer circumferential groove 16
      Groove width: 10.5 mm
      Groove depth: 10.2 mm
   Axial grooves 17, 18
      Groove width: 7 mm
      Groove depth: 6.5 mm
      Angle θ1: 70 degrees
   Narrow groove 20
      Groove width: 1.0 mm
      Groove depth: 5.5 mm
      Angle θ2: 45 degrees
In case of the middle part formed as a rib, the axial grooves 18 and narrow grooves 20 were simply omitted from that shown in Fig.7.

From the test results, it was confirmed that heel and toe wear and the shoulder wear too can be effectively reduced, while maintaining satisfactory high-speed durability and practically equal ride comfort.

## Claims

1. A pneumatic tire comprising
a tread portion,
a pair of sidewall portions,
a pair of bead portions,
a carcass extending between the bead portions,
a breaker disposed radially outside the carcass, and
a band disposed radially outside the breaker, said band composed of a full width ply extending across the substantially overall width of the breaker and a pair of axially spaced edge plies, **characterized in that**,
in a ground contacting face of the tire under a normally inflate loaded condition which face has axially outermost edges between which the ground contacting width Tw is defined, the circumferential length LS of the ground contacting face at an axial position 10 % of TW axially inwards of each of the axially outermost edges is in a range of from 75 to 85 % of the circumferential length LC of the ground contacting face at the center of the ground contacting width.

2. The pneumatic tire according to claim 1, **characterised in that**
the tread portion is provided on each side of the tire equator with a circumferentially continuously extending inner circumferential groove so that the tread portion is divided into a crown part between the inner circumferential grooves and a pair of outer parts axially outside the inner circumferential grooves, and
the crown part is formed as a substantially continuously extending circumferential rib.

3. The pneumatic tire according to claim 1, **characterized in that**
the tread portion is further provided on the axially outside of each said inner circumferential groove with a circumferentially continuously extending axially outer circumferential groove so that each said outer part is divided into an axially inner middle part and an axially outer shoulder part, and
at least the shoulder parts are each circumferentially divided by axial grooves into shoulder blocks, and
the number of said axial grooves in each said shoulder part is such that 2 to 4 grooves are included in the ground contacting face.

4. The pneumatic tire according to claim 3, **characterized in that**
the axial grooves each have an overall inclination angle in a range of from 60 to 80 degrees, wherein the overall inclination angle is an angle of a straight line drawn between the ends of the axial groove with respect to the tire circumferential direction, and
said shoulder blocks are each subdivided by a narrow groove into two block segments,
the narrow groove is inclined such that, with respect to the tire circumferential direction, a straight line drawn between the ends of the groove is inclined reversely to said straight lines of the circumferentially adjacent axial grooves.

## Patentansprüche

1. Luftreifen, umfassend
einen Laufflächenabschnitt,
ein Paar Seitenwandabschnitte,
ein Paar Wulstabschnitte,
eine Karkasse, die sich zwischen den Wulstabschnitten erstreckt,
einen Breaker, der radial außerhalb der Karkasse angeordnet ist, und
ein Band, das radial außerhalb des Breakers angeordnet ist, wobei das Band aus einer Lage mit voller Breite, die sich über im Wesentlichen die gesamte Breite des Breakers erstreckt und einem Paar axial beabstandeten Randlagen zusammengesetzt ist,
**dadurch gekennzeichnet, dass** in einer Bodenkontaktfläche des Reifens unter einem normal aufgepumpten belasteten Zustand, wobei die Fläche axial äußerste Kanten aufweist, zwischen denen die Bodenkontaktbreite TW definiert ist, die Umfangslänge Ls der Bodenkontaktfläche an einer axialen Position 10 % von TW axial innen von jeder der axial äußersten Kanten in einem Bereich von 75 bis 85 % der Umfangslänge Lc der Bodenkontaktfläche in der Mitte der Bodenkontaktbreite liegt.

2. Luftreifen nach Anspruch 1,
**dadurch gekennzeichnet , dass**
der Laufflächenabschnitt auf jeder Seite des Reifenäquators mit einer sich in Umfangsrichtung kontinuierlich erstreckenden inneren Umfangsrille versehen ist, so dass der Laufflächenabschnitt in einen Kronenteil zwischen den inneren Umfangsrillen und ein Paar äußere Teile axial außerhalb der inneren Umfangsrillen unterteilt ist, und
der Kronenteil als eine sich im Wesentlichen kontinuierlich erstreckende Umfangsrippe ausgebildet ist.

3. Luftreifen nach Anspruch 1,
**dadurch gekennzeichnet , dass**
der Laufflächenabschnitt darüber hinaus auf der axialen Außenseite einer jeden inneren Umfangsrille mit einer sich in Umfangsrichtung kontinuierlich erstreckenden axial äußeren Umfangsrille versehen ist, so dass jeder äußere Teil in einen axial inneren mittleren Teil und einen axial äußeren Schulterteil unterteilt ist, und
zumindest die Schulterteile jeweils in Umfangsrichtung durch axiale Rillen in Schulterblöcke unterteilt sind, und
die Anzahl der axialen Rillen in jedem Schulterteil derart ist, dass 2 bis 4 Rillen in der Bodenkontaktfläche enthalten sind.

4. Luftreifen nach Anspruch 3,
**dadurch gekennzeichnet, dass**
die axialen Rillen jeweils einen Gesamtneigungswinkel in einem Bereich von 60 bis 80 Grad aufweisen, wobei der Gesamtneigungswinkel ein Winkel einer geraden Linie, die zwischen den Enden der axialen Rille gezogen ist, in Bezug auf die Umfangsrichtung des Reifens ist, und
die Schulterblöcke jeweils durch eine schmale Rille in zwei Blocksegmente unterteilt sind, und
die schmale Rille derart geneigt ist, dass in Bezug auf die Umfangsrichtung des Reifens eine gerade Linie, die zwischen den Enden der Rille gezogen ist, umgekehrt zu den geraden Linien der in Umfangsrichtung benachbarten axialen Rillen geneigt ist.

## Revendications

1. Bandage pneumatique comprenant :
une partie de bande de roulement,
une paire de parties de paroi latérale,
une paire de parties de talon,
une carcasse s'étendant entre les parties de talon,
une nappe de renforcement de la bande de roulement disposée radialement à l'extérieur de la carcasse, et
une bande disposée radialement à l'extérieur de la nappe de renforcement de la bande de roulement, ladite bande étant composée d'un pli en pleine largeur s'étendant sensiblement sur toute la largeur de la nappe de renforcement de la bande de roulement et une paire de plis de bord espacés de manière axiale, **caractérisé en ce que** :
dans une face de contact avec le sol du bandage dans une condition chargée normalement gonflée, dont la face a des bords axialement le plus à l'extérieur entre lesquels la largeur de contact avec le sol TW est définie, la longueur circonférentielle LS de la face de contact avec le sol au niveau d'une position axiale représentant 10% de TW axialement vers l'intérieur de chacun des bords axialement le plus à l'extérieur est de l'ordre de 75 à 85% de la longueur circonférentielle LC de la face de contact avec le sol au centre de la largeur de contact avec le sol.

2. Bandage pneumatique selon la revendication 1, **caractérisé en ce que** la partie de bande de roulement est prévue de chaque côté de l'équateur du bandage avec une rainure circonférentielle interne s'étendant de manière continue et circonférentielle de sorte que la partie de bande de roulement est divisée en une partie de sommet entre les rainures circonférentielles internes et une paire de parties externes axialement vers l'extérieur des rainures circonférentielles internes, et
la partie de sommet est formée comme une nervure circonférentielle s'étendant de manière sensiblement continue.

3. Bandage pneumatique selon la revendication 1, **caractérisé en ce que** la partie de bande de roulement est en outre prévue sur l'extérieur axial de chacune desdites rainures circonférentielles internes avec une rainure circonférentielle axialement externe s'étendant de manière circonférentielle et continue de sorte que chacune desdites parties externes est divisée en une partie centrale axialement interne et une partie d'épaulement axialement externe, et
au moins les parties d'épaulement sont chacune divisées de manière circonférentielle par des rainures axiales en blocs d'épaulement, et
le nombre desdites rainures axiales dans chacune desdites parties d'épaulement est tel que 2 à 4 rainures sont comprises dans la face de contact avec le sol.

4. Bandage pneumatique selon la revendication 3, **caractérisé en ce que** les rainures axiales ont chacune un angle d'inclinaison total de l'ordre de 60 à 80 degrés, dans lequel l'angle d'inclinaison total est un angle d'une ligne droite tracée entre les extrémités de la rainure axiale par rapport à la direction circonférentielle du bandage, et
lesdits blocs d'épaulement sont chacun divisés par une rainure étroite en deux segments de bloc,
la rainure étroite est inclinée de sorte que, par rapport à la direction circonférentielle du bandage, une ligne droite tracée entre les extrémités de la rainure est inclinée de manière inversée par rapport auxdites lignes droites des rainures axiales adjacentes de manière circonférentielle.
